# EUROPÄISCHE PATENTSCHRIFT

(11) **EP 3 426 041 B1**
(45) Veröffentlichungstag und Bekanntmachung des Hinweises auf die Patenterteilung: **23.09.2020**
(21) Anmeldenummer: 17707339.2
(22) Anmeldetag: 28.02.2017
(51) Int. Cl.: A01N 43/824, A01N 43/80, A01N 43/707, A01N 25/32

(54) **HERBIZIDE ZUSAMMENSETZUNG ENTHALTEND EINEN HPPD-INHIBITOR, ISOXADIFEN-ETHYL UND METRIBUZIN**
HERBICIDAL COMPOSITION COMPRISING AN HPPD-INHIBITOR, ISOXADIFEN-ETHYL AND METRIBUZINE
COMPOSITION HERBICIDE COMPRENANT UN INHIBITEUR DE HPPD, DE L'ISOXADIFÈNE-ÉTHYL ET DE LA MÉTRIBUZINE

(30) Priorität: 07.03.2016 EP 16158859
(43) Veröffentlichungstag der Anmeldung: 16.01.2019
(73) Patentinhaber: Bayer CropScience Aktiengesellschaft, 40789 Monheim am Rhein (DE)
(72) Erfinder: LORENTZ, Lothar, 51545 Waldbröl (DE); TRABOLD, Klaus, 69123 Heidelberg (DE); SCHMIDT, Mathias, 65529 Waldems (DE); DE OLIVEIRA, Thiago, 13458-900 Santa Barbara do Oeste (BR)
(74) Vertreter: BIP Patents
(86) Internationale Anmeldenummer: PCT/EP2017/054591
(87) Internationale Veröffentlichungsnummer: WO 2017/153205

(56) Entgegenhaltungen:
- WO-A1-2012/126932
- WO-A1-2014/072250
- WO-A1-2015/049225
- WO-A1-2015/059187
- WO-A2-2007/006416

## Beschreibung

Die vorliegende Erfindung betrifft agrochemisch wirksame herbizide Zusammensetzungen sowie deren Verwendung zur Bekämpfung von Schadpflanzen.

Speziell betrifft sie agrochemisch wirksame herbizide Zusammensetzungen enthaltend Verbindungen aus der Gruppe der Inhibitoren der Hydroxyphenylpyruvat- Dioygenase (HPPD), Triazine und Safener. Diese herbiziden Zusammensetzungen sind zur Bekämpfung unerwünschter Schadpflanzen in Mais- und Zuckerrohr-Kulturen besonders gut geeignet.

Aus dem Stand der Technik sind bereits einige herbizide Zusammensetzungen enthaltend Verbindungen aus der Gruppe der HPPD-Inhibitoren, Triazine und Safener bekannt. WO 2007/006415 A1 beschreibt herbizide Zusammensetzungen enthaltend den HPPD-Inhibitor Tembotrione, Atrazin/Terbuthylazin und Isoxadifen-ethyl. WO 2007/006415 A1 offenbart auch, daß diese Zusammensetzung eine höhere synergistische herbizide Wirkung hat als die herbizid Zusammensetzung enthaltend Tembotrione und Atrazin/Terbuthylazin. WO 2015/059187 A1 offenbart herbizide Zusammensetzungen enthaltend HPPD-Inhibitoren aus der Gruppe der N-(1,3,4-Oxadiazol-2-yl)arylcarbon-säureamide und Herbizide aus der Gruppe der Triazine, wie Metribuzin. WO 2015/049225 A1 offenbart Herbizid-Safener-Zusammensetzungen enthaltend HPPD-Inhibitoren aus der Gruppe der N-(1,3,4-Oxadiazol-2-yl)arylcarbonsäureamide. Jedoch ist - entweder die herbizide Wirkung - oder die Verträglichkeit dieser herbiziden Zusammensetzungen gegenüber den Kulturpflanzen Mais und insbesondere Zuckerrohr trotz der Anwesenheit des Safeners Isoxadifen-ethyl nicht immer hinreichend.

Die Aufgabe der vorliegenden Erfindung bestand in der Bereitstellung von herbiziden Zusammensetzungen, die bei hinreichender herbizider Wirkung auch eine gute Verträglichkeit gegenüber den Kulturpflanzen Mais und Zuckerrohr aufweisen.

Es wurde nun gefunden, dass herbizide Zusammensetzungen enthaltend bestimmte Verbindungen aus der Gruppe der HPPD-Inhibitoren, Safener und Triazine bei hinreichender herbizider Wirkung auch eine gute Verträglichkeit gegenüber den Kulturpflanzen Mais und Zuckerrohr aufweisen.

Gegenstand vorliegender Erfindung sind somit herbizide Zusammensetzungen enthaltend
A) eine Verbindung aus der Gruppe bestehend aus
   (A5) Verbindung der Formel A5 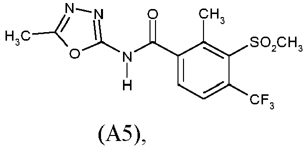 oder deren Salze
   (Komponente A),
B) Isoxadifen-ethyl
   (Komponente B), und
C) Metribuzin
   (Komponente C).

Die Verbindung der Formel (A5) ist beispielsweise aus WO 2012/126932 A1 als Herbizid bekannt. Die Verbindung Isoxadifen-ethyl ist aus "The Pesticide Manual", 16th edition, The British Crop Protection Council and the Royal Soc. of Chemistry, 2012 als Safener bekannt. Die Verbindung Metribuzin ist aus "The Pesticide Manual", 16th edition, The British Crop Protection Council and the Royal Soc. of Chemistry, 2012 als Herbizid bekannt.

Die erfindungsgemäßen herbiziden Zusammensetzungen können zusätzlich weitere Komponenten, beispielsweise Pflanzenschutzmittelwirkstoffe anderer Art und/oder im Pflanzenschutz übliche Zusatzstoffe und/oder Formulierungshilfsmittel, enthalten oder zusammen mit diesen eingesetzt werden.

Die erfindungsgemäßen herbiziden Zusammensetzungen zeigen nicht nur eine ausreichende herbizide Wirkung gegenüber einer Vielzahl von und typischerweise in Mais- oder Zuckerrohrplantagen vorkommenden Schadpflanzen, sondern überraschenderweise auch eine deutlich geringere Phythotoxizität gegenüber den Kulturpflanzen als die jeweilige herbizide Zusammensetzung enthaltend HPPD-Inhibitor und Safener. Dies ist insofern überraschend, da aus dem Stand der Technik keinerlei Hinweise bekannt sind, daß Herbizide aus der Gruppe der Triazine zu einer Verringerung der Phythotoxizität gegenüber den Kulturpflanzen leisten.

Die erfindungsgemäßen herbiziden Zusammensetzungen können auf dem Fachmann bekannte Weise angewendet werden, beispielsweise gemeinsam (beispielsweise als Co-Formulierung oder als TankMischung) oder auch zeitlich kurz hintereinander versetzt (Splitting), z.B. auf die Pflanzen, Pflanzenteile, Pflanzensamen oder die Fläche, auf der die Pflanzen wachsen. Möglich ist z.B. die Anwendung der Einzelwirkstoffe oder der herbiziden Zusammensetzungen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Komponenten A, B und C. Ebenso bevorzugt ist die Anwendung der Komponente B im Saatbeizverfahren und die gemeinsame oder zeitnahe Anwendung der Komponenten A und C.

In den erfindungsgemäßen herbiziden Zusammensetzungen beträgt die Aufwandmenge der Komponente A üblicherweise 5 bis 200 g Aktivsusbstanz (a. i.) pro Hektar, bevorzugt 10 bis 150 g a. i./ha, insbesondere bevorzugt 15 bis 80 g a. i./ha. Die Aufwandmenge von Komponente B beträgt üblicherweise 30 bis 500 g Aktivsubstanz pro Hektar, bevorzugt 50 bis 300 g a. i./ha. Die Aufwandmenge von Komponente C beträgt üblicherweise 50 bis 5000 g Aktivsubstanz pro Hektar, bevorzugt 75 bis 2000 g a. i./ha.

Die Gewichtsverhältnisse der Komponenten A zu B einerseits und (A+B) zu C andererseits können in weiten Bereichen variiert werden. Üblicherweise liegt das Mengenverhältnis der Komponenten A zu B im Bereich von 1:100 bis 6,7:1, bevorzugt im Bereich von 1:30 bis 3:1. Üblicherweise liegt das Mengenverhältnis der Komponenten (A+B) zu C im Bereich von 1:143 bis 140:1, bevorzugt im Bereich von 1:33,3 bis 6:1. Die vorstehend genannten Bereiche gelten auch für den Fall, daß die erfindungsgemäßen herbiziden Zusammensetzungen mehr als eine Komponente B und/oder Komponente C enthalten. Die genannten Zahlenwerte gelten dann für die summierten Einzelwerte der Komponenten B beziehungsweise C.

Optimale Gewichtsverhältnisse können vom jeweiligen Applikationsgebiet, Unkrautspektrum und der eingesetzten Wirkstoffkombination abhängen und in Vorversuchen bestimmt werden.

Bei Anwendung der erfindungsgemäßen herbiziden Zusammensetzungen wird im Vor- und Nachauflaufverfahren ein sehr breites Spektrum an Schadpflanzen bekämpft, z.B. annuellen und perennierenden mono- oder dikotylen Unkräutern sowie an unerwünschten Kulturpflanzen. Die erfindungsgemäßen herbiziden Zusammensetzungen eignen sich besonders zum Einsatz in Kulturen wie Mais und Zuckerrohr sowie für den Einsatz in Dauerkulturen, Plantagen und auf Nichtkulturland. Bevorzugt ist ihre Anwendung in Kulturen von Mais und Zuckerrohr. Ebenso eigenen sie sich sehr gut für den Einsatz in transgenen Kulturen von Mais.

Gegenstand der vorliegenden Erfindung ist somit weiterhin ein Verfahren zur Bekämpfung von unerwünschten Pflanzen in Pflanzenkulturen, das dadurch gekennzeichnet ist, dass die Komponenten A, B und C der erfindungsgemäßen herbiziden Zusammensetzungen auf die Pflanzen (z.B. Schadpflanzen wie mono- oder dikotyle Unkräuter oder unerwünschte Kulturpflanzen), oder die Fläche, auf der die Pflanzen wachsen ausgebracht werden, z.B. gemeinsam oder getrennt.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein.

Monokotyle Unkräuter entstammen z.B. den Gattungen Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera. Dikotyle Unkräuter entstammen z.B. den Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum, Euphorbia.

Gegenstand der Erfindung ist auch die Verwendung der erfindungsgemäßen herbiziden Zusammensetzungen zur Bekämpfung von unerwünschtem Pflanzenwuchs, vorzugsweise in Kulturen von Nutzpflanzen, insbesondere Mais und Zuckerrohr. Ganz besonders bevorzugt ist die Verwendung in Zuckerrohr.

Die erfindungsgemäßen herbiziden Zusammensetzungen können nach bekannten Verfahren z.B. als Mischformulierungen der Einzelkomponenten, auch mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten Einzelkomponenten mit Wasser hergestellt werden. Ebenfalls möglich ist die zeitlich versetzte Anwendung (Splitapplikation) der getrennt formulierten oder partiell getrennt formulierten Einzelkomponenten. Möglich ist auch die Anwendung der Einzelkomponenten oder der herbiziden Zusammensetzungen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die erfindungsgemäßen herbiziden Zusammensetzungen können auch zur Bekämpfung von Schadpflanzen in Kulturen von bekannten gentechnisch veränderten Pflanzen eingesetzt werden.

Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche gegen bestimmte Herbizide vom Typ Glufosinate (vgl. z. B. EP-A-0242236, EP-A-242246) oder Glyphosate (WO 92/00377) oder der Sulfonylharnstoffe (EP-A-0257993, US-A-5013659) resistent sind,
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualität auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h., sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Zusammensetzungen in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydroxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, resistent sind.

Bei der Anwendung der erfindungsgemäßen Zusammensetzungen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen. Gegenstand der Erfindung ist deshalb auch die Verwendung der erfindungsgemäßen Zusammensetzungen zur Bekämpfung von Schadpflanzen in transgenen Kulturpflanzen.

Bevorzugt ist die Anwendung der erfindungsgemäßen Zusammensetzungen in wirtschaftlich bedeutenden transgenen Kulturen von Mais und Zuckerrohr. Gegenstand der Erfindung ist deshalb auch die Verwendung der erfindungsgemäßen Zusammensetzungen zur Bekämpfung von Schadpflanzen in transgenen Kulturpflanzen oder Kulturpflanzen, die Toleranz durch Selektionszüchtung aufweisen.

Die Komponenten A, B und C können gemeinsam oder getrennt in übliche Formulierungen z.B. zur Sprüh-, Gieß- und Spritzanwendung übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Komponenten A, B und C mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier-und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent der Komponenten A, B und C, vorzugsweise zwischen 0,5 und 90 Gew.-%. Die Komponenten A, B und C können als solche oder in ihren Formulierungen auch in Mischung mit anderen agrochemischen Wirkstoffen zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Schutzstoffen gegen Vogelfraß, Pflanzennährstoffen und Bodenstrukturverbesserungsmitteln sind möglich, ebenso mit im Pflanzenschutz üblichen Zusatzstoffen und Formulierungshilfsmitteln.

Die Komponenten A, B und C können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht üblicherweise, z.B. durch Gießen, Spritzen, Sprühen, Streuen.

Die Komponenten A, B und C können auf die Pflanzen, Pflanzenteile oder die Anbaufläche (Ackerboden) ausgebracht werden, vorzugsweise auf die grünen Pflanzen und Pflanzenteile und auf den Ackerboden. Eine Möglichkeit der Anwendung ist die gemeinsame Ausbringung der Wirkstoffe in Form von Tankmischungen, wobei die formulierten konzentrierten Formulierungen der Einzelwirkstoffe gemeinsam im Tank mit Wasser gemischt und die erhaltene Spritzbrühe ausgebracht wird.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

### Ausführungsbeispiele:

Herbizide Wirkung gegen Schadpflanzen und Phytotoxizität gegenüber Nutzpflanzen im Nachauflauf: Zuckerrohr einer Wuchshöhe von 25 bis 30 cm und Schadpflanzen werden mit erfindungsgemäßen herbiziden Zusammensetzungen enthaltend Komponenten A, B und C behandelt. Zu Vergleichszwecken werden die gleichen Versuche durchgeführt mit herbiziden Zusammensetzungen enthaltend nur Komponenten A und B sowie mit herbiziden Zusammensetzungen enthaltend nur Komponente A. Die herbizide Wirkung und Phythotoxizität der erfindungsgemäßen Zusammensetzungen sind vergleichend in nachfolgenden Tabellen dargestellt.

Die Abkürzungen bedeuten:
BIDPI Bidens pilosa EPHHL Euphorbia heterophylla
IPOAO Ipomoea aristolochiaefolia

**Tabelle 1**

| | herbizide Zusammensetzung | Dosierung [g/ha] | herbizideWirkung [%] gegen | | |
|---|---|---|---|---|---|
| | | | IPOAO | EPHHL | BIDPI |
| 1 | A5 | 50 | 38% | 30% | 42% |
| 2 | A5 + B1 | 50 + 150 | 37% | 28% | 38% |
| 3 | A5 + B1 + C4 | 50 + 150 + 480 | 77% | 50% | 85% |

**Tabelle 2**

| | herbizide Zusammensetzung | Dosierung [g/ha] | herbizideWirkung [%] gegen Saccharum officinarum (Zuckerrohr) |
|---|---|---|---|
| 1 | A5 | 50 | 14% |
| 2 | A5 + B1 | 50 + 150 | 6% |
| 3 | A5 + C4 | 50 + 480 | 8% |
| 4 | A5 + B1 + C4 | 50 + 150 + 480 | 4% |

Die Ergebnisse in Tabelle 1 zeigen, daß die Mischung (Zeile 2) des Herbizids A5 mit dem Safener B1 im Rahmen der Boniturgenauigkeit die gleiche herbizide Wirkung gegen Schadpflanzen aufweist wie das Herbizid A5 allein (Zeile 1). Die Mischung (Zeile 3) des Herbizids A5 mit dem Safener B1 und dem Herbizid C4 zeigt eine deutlich gesteigerte herbizide Wirkung gegen Schadpflanzen.
Die Daten in Tabelle 2 zeigen überraschenderweise, daß die Mischung (Zeile 4) des Herbizids A5 mit dem Safener B1 und dem Herbizid C4 eine deutlich geringere Schädigung an der Kulturpflanze Zuckerrohr verursacht, als die Mischung (Zeile 2) des Herbizids A5 mit dem Safener B1.

## Patentansprüche

1. Herbizide Zusammensetzungen enthaltend
A) die Verbindung der Formel A5 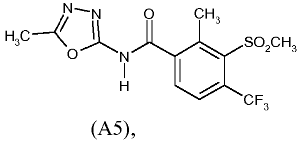 oder deren Salze
(Komponente A),
B) Isoxadifen-ethyl
(Komponente B), und
C) Metribuzin
(Komponente C).

2. Herbizide Zusammensetzungen gemäß Anspruch 1 in Mischung mit Formulierungshilfsmitteln.

3. Herbizide Zusammensetzungen gemäß Anspruch 1 oder 2 enthaltend mindestens einen weiteren pestizid wirksamen Stoff aus der Gruppe Insektizide, Akarizide, Herbizide, Fungizide, Safener und Wachstumsregulatoren.

4. Herbizide Zusammensetzungen gemäß einem der Ansprüche 1 bis 3 enthaltend die Komponenten A und B in einem Verhältnis von 1:100 bis 6,7:1 und die Komponenten (A+B) und C in einem Verhältnis von 1:143 bis 140:1.

5. Herbizide Zusammensetzungen gemäß einem der Ansprüche 1 bis 4 enthaltend die Komponenten A und B in einem Verhältnis von 1:30 bis 3:1 und die Komponenten (A+B) und C in einem Verhältnis von 1:33,3 bis 6:1.

6. Verfahren zur Bekämpfung unerwünschter Pflanzen, **dadurch gekennzeichnet, daß** man eine herbizide Zusammensetzung gemäß einem der Ansprüche 1 bis 5 auf die Pflanzen oder auf den Ort des unerwünschten Pflanzenwachstums appliziert.

7. Verfahren nach Anspruch 6, **dadurch gekennzeichnet, daß** die Bekämpfung unerwünschter Pflanzen in Kulturen von Mais oder Zuckerrohr erfolgt.

## Claims

1. Herbicidal compositions, comprising
A) the composition of the formula A5 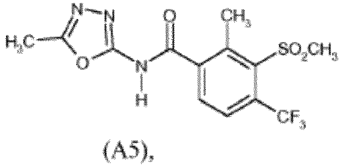 or salts thereof
(component A),
B) isoxadifen-ethyl
(component B), and
C) metribuzin
(component C).

2. Herbicidal compositions according to Claim 1 in a mixture with formulation auxiliaries.

3. Herbicidal compositions according to Claim 1 or 2, comprising at least one further pesticidally active substance from the group consisting of insecticides, acaricides, herbicides, fungicides, safeners and growth regulators.

4. Herbicidal compositions according to any of Claims 1 to 3, comprising the components A and B in a ratio of from 1:100 to 6.7:1 and the components (A+B) and C in a ratio of from 1:143 to 140:1.

5. Herbicidal compositions according to any of Claims 1 to 4, comprising the components A and B in a ratio of from 1:30 to 3:1 and the components (A+B) and C in a ratio of from 1:33.3 to 6:1.

6. Method for controlling unwanted plants, **characterized in that** a herbicidal composition according to any of Claims 1 to 5 is applied to the plants or to the site of the unwanted vegetation.

7. Method according to Claim 6, **characterized in that** the control of unwanted plants takes place in the crops of maize or sugar cane.

## Revendications

1. Compositions herbicides contenant
A) le composé de formule A5 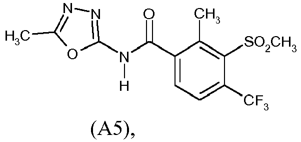 ou ses sels (composant A),
B) de l'isoxadifen-éthyl (composant B) et
C) de la métribuzine (composant C).

2. Compositions herbicides selon la revendication 1 en mélange avec des adjuvants de formulation.

3. Compositions herbicides selon la revendication 1 ou 2 contenant au moins une autre substance active en tant que pesticide du groupe formé par les insecticides, les acaricides, les herbicides, les fongicides, les antidotes et les régulateurs de croissance.

4. Compositions herbicides selon l'une quelconque des revendications 1 à 3 contenant les composants A et B dans un rapport de 1:100 à 6,7:1 et les composants (A + B) et C dans un rapport de 1:143 à 140:1.

5. Compositions herbicides selon l'une quelconque des revendications 1 à 4 contenant les composants A et B dans un rapport de 1:30 à 3:1 et les composants (A + B) et C dans un rapport de 1:33,3 à 6:1.

6. Procédé pour lutter contre des plantes non souhaitées, **caractérisé en ce qu'**on applique une composition herbicide selon l'une quelconque des revendications 1 à 5 sur les plantes ou sur le lieu de la croissance des plantes non souhaitées.

7. Procédé selon la revendication 6, **caractérisé en ce que** la lutte contre les plantes non souhaitées a lieu dans des cultures de maïs ou de canne à sucre.
